# EUROPÄISCHE PATENTANMELDUNG

(11) **EP 1 346 806 A1**
(43) Veröffentlichungstag der Anmeldung: **24.09.2003**
(21) Anmeldenummer: 03005990.1
(22) Anmeldetag: 18.03.2003
(51) Int. Cl.: B29B 7/42, B29C 67/24

(54) **Vorrichtung zum Mischen von wenigstens zwei Flüssigkomponenten mit Trockenschüttgut**

(30) Priorität: 22.03.2002 DE 10213022
(71) Anmelder: Hilger u. Kern GmbH, D-68167 Mannheim (DE)
(72) Erfinder: Wainzyk, Bernd, 30880 Laatzen (DE)
(74) Vertreter: Kesselhut, Wolf, Dipl.-Ing.

(57) **Zusammenfassung**

Eine Vorrichtung zum Mischen von wenigsten zwei Flüssigkomponenten (2, 4) insbesondere Polyol und Isozynat, mit Trockenschüttgut (6), mit einer eine rotierende erste Schnecke (12) enthaltenden Mischkammer (10), der die Flüssigkomponenten (2, 4) an einem ersten Ende zugeführt werden, und aus der das fertige Mischgut (28) durch eine Auslassöffnung (26) hindurch an einem zweiten Ende austritt, ist dadurch gekennzeichnet, dass die erste Schnecke (12) als eine zweigängige Transport- und Mischschnecke ausgebildet ist, die einen zur Auslassöffnung (26) hin zusammenlaufenden konischen Abschnitt (24) aufweist, und dass eine zweite, im Wesentlichen im rechten Winkel zur ersten Schnecke (12) angeordnete Transportschnecke (30) vorgesehen ist, die das Schüttgut (6) im Bereich des ersten Endes in die Mischkammer (10) fördert.

## Beschreibung

Die Erfindung betrifft eine Vorrichtung zum Mischen von wenigstens zwei Flüssigkomponenten, insbesondere von Polyol und Isozynat, mit Trockenschüttgut, gemäß dem Oberbegriff von Anspruch 1.

Bei der Herstellung von Gebrauchsartikeln aus elastischem Kunststoff, beispielsweise von Schuhsohlen, werden heutzutage Zweikomponenten-Polymere, beispielsweise Polyol und Ioszynat, in Polymer-Zweikomponentenmischanlagen zusammengemischt, und das flüssige Mischgut in eine entsprechende Form gegossen, in der das Zweikomponenten-Polymer aushärtet und in dieser Weise den zu bildenden Gegenstand formt.

Das Vermischen der beiden Polymer-Flüssigkomponenten erfolgt hierbei beispielsweise dynamisch durch Zuführen der beiden Flüssigkomponenten in eine Mischkammer, in der eine Förder- und Mischschnecke rotiert, die die beiden Flüssigkomponenten gleichzeitig vermischt und in Richtung einer am Ende der Mischkammer angeordneten Austrittsöffnung transportiert. Über in den jeweiligen Zuleitungen für die Flüssigkomponenten enthaltene Ventile können hierbei sowohl das Mischungsverhältnis beider Komponenten, als auch der gesamte Durchsatz an Mischgut verändert werden.

Aufgrund der Konstruktion und der Größe eigenen sich die bekannten dynamischen Mischeinrichtungen nicht dazu, die Flüssigkomponenten zusätzlich noch mit einer dritten Komponente aus trockenem Material, insbesondere aus Schüttgut, zu vermischen, welches den beiden Flüssigkomponenten zur Reduzierung des spezifischen Gewichts der fertigen Kunststoffprodukte sowie zur Erhöhung der Festigkeit oder Komforteigenschaften beigemischt wird.

Dies ist darauf zurückzuführen, dass das trockene Schüttgut, beispielsweise Kork, aufgrund seiner volumenkompressiblen Eigenschaften in der Regel zum Verstopfen der Zuleitungen sowie der Rotationsmischkammer neigt.

Die DE-OS 26 49 996 beschreibt eine Vorrichtung zum Herstellen eines füllstoffhaltigen Reaktionsgemisches aus mindestens zwei fließfähigen Komponenten, die eine Mischkammer mit einer darin rotierenden ersten Schnecke umfasst, welcher die Flüssigkomponenten an einem ersten Ende zugeführt werden, und aus der das fertige Mischgut durch eine Auslassöffnung hindurch an einem zweiten Ende austritt. Die Zufuhr des Schüttguts, beispielsweise Glasfasern oder feingemahlene Schaumstoffabfälle, werden der Mischkammer über eine zweite Schnecke zugeführt, die im wesentlichen im rechten Winkel zur ersten Schnecke angeordnet ist, und das Schüttgut im Bereich des ersten Endes der Mischkammer in diese fördert. Aufgrund der Ausgestaltung der Wendelform der ersten Schnecke im Bereich der Mischkammer sowie der Ausgestaltung der zweiten Transportschnecke zur Zufuhr des Trockenschüttguts neigt die beschriebene Vorrichtung insbesondere bei der Verarbeitung von leichten kompressiblen Materialien zu Verstopfungen.

Dem gemäß ist es eine Aufgabe der vorliegenden Erfindung, eine Vorrichtung zum Mischen von wenigstens zwei Flüssigkomponenten mit Trockenschüttgut zu schaffen, welche eine in hohem Maße konstante und homogene Durchmischung der Materialien gewährleistet, und in der sich auch Materialien, insbesondere Kork, verarbeiten lassen, die eine hohe Neigung zum Verstopfen der Vorrichtung aufweisen.

Diese Aufgabe wird gemäß der Erfindung durch die Merkmale von Anspruch 1 gelöst.

Weitere Merkmale der Erfindung sind in den Unteransprüchen enthalten.

Gemäß der Erfindung umfasst eine Vorrichtung zum Mischen von wenigstens zwei Flüssigkomponenten, wie beispielsweise Polyol und Isozynat, mit Trockenschüttgut, insbesondere mit Kork mit einer Korngröße im Bereich von 1-2 mm, eine Mischkammer, in die die beiden Flüssigkomponenten sowie das Trockenschüttgut an einem ersten Ende zugeführt werden.

In der Mischkammer ist eine erste rotierende Schnecke angeordnet, die in erfindungsgemäßer Weise als eine zweigängige Transport- und Mischschnecke ausgebildet ist, die einen in Richtung zu einer am zweiten Ende der Mischkammer angeordneten Auslassöffnung hin zusammenlaufenden konischen oder kegelstumpförmigen Abschnitt aufweist, aus welchem das fertige Mischgut austritt. Das Trockenschüttgut wird hierbei über eine vorzugsweise im rechten Winkel zur ersten Schnecke angeordnete zweite Transportschnecke unmittelbar in die Mischkammer gefördert, die vorzugsweise bis nahe an die erste Schnecke heranragt.

Durch die erfindungsgemäße Vorrichtung ergibt sich der Vorteil, dass das Trockenmischgut sowie die beiden Flüssigkomponenten erst in der Mischkammer miteinander vermischt werden, wodurch auch bei kurzen Topfzeiten von z.B. zwei Minuten die Topfzeiten für die Flüssigkomponenten optimal ausgenutzt werden, und zudem eine vollständige Benetzung des Trockenschüttguts mit den beiden homogen vermischten Flüssigkomponenten erreicht werden kann. Wie sich in der Praxis gezeigt hat, wird durch die erfindungsgemäße Anordnung von einer unmittelbar in der Mischkammer rotierenden ersten Transport- und Mischschnecke mit konischem Abschnitt sowie einer im rechten Winkel dazu angeordneten und bis dicht an die erste Schnecke heranreichenden zweiten Transportschnecke für das Trockenschüttgut ein äußerst zuverlässiger Transport des Trockenschüttguts, sowie auch des fertigen Mischguts erreicht, welches aus der Auslassöffnung heraus unmittelbar in die Form für das zu erzeugende Kunststoffprodukt eingebracht wird. Bei dem Kunststoffprodukt handelt es sich beispielsweise um eine Schuhsohle oder ein anderes Kunststoff-Formteil mit einem geringen spezifischen Gewicht.

Durch die Ausgestaltung der ersten Transport- und Mischschnecke als zweigängige Schnecke, das heißt als Schnecke, die einen Doppelwendel oder einen doppelt gewundenen Schraubengang aufweist, ergibt sich in der Praxis auch bei einer vergleichsweise kurzen Länge der ersten Schnecke und sehr niedrigen Drehzahlen von weniger als 3000 Umdrehungen pro Minute eine sehr gleichförmige und konstante Durchmischung aller drei Komponenten sowie eine vollständige Benetzung des Trockenschüttguts mit den durchmischten Flüssigkomponenten, wahlweise einstellbar bis in den extrem hochviskosen bzw. pastösen Gemischbereich.

Gemäß einer weiteren Ausführungsform der Erfindung weist die zweite Schnecke vorzugsweise im Bereich der Zuführöffnung für das Trockenschüttgut eine asymmetrische Wendelform auf, d. h. eine Wendelform, bei der sich die Ganghöhe innerhalb des Bereichs erhöht und wieder erniedrigt, wodurch sich die Gefahr eines Verstopfens der Zufuhröffnung oder eine Blockade der zweiten Schnecke zusätzlich verringern lässt, was insbesondere bei der Verarbeitung von Kork von großem Vorteil ist.

Die zweite Schnecke hat neben der asymmetrischen Wendelform im Bereich der Zuführöffnung für das Trockenschüttgut vorzugsweise eine symmetrisch verlaufende Wendelform, deren Ganghöhe zur Mischkammer hin jedoch in vorteilhafter Weise abnimmt. Hierdurch wird sichergestellt, dass das Trockenschüttgut in einer gewissermaßen vorkomprimierten Form durch die zweite Schnecke in die Mischkammer eingebracht wird, wodurch sich die Gefahr von Lufteinschlüssen im Mischgut weiter reduzieren lässt.

Das Mischgut wird hierbei im Bereich der asymmetrischen Wendelform der zweiten Schnecke durch eine oberhalb der zweiten Schnecke angeordnete Trockenschüttgut-Zuführöffnung zugeführt, die vorzugsweise eine im Bereich des Durchmessers der zweiten Schnecke liegende Querschnittsgröße aufweist, und auf die gemäß einer weiteren Ausführungsform der Erfindung unmittelbar ein Behälter für das Trockenschüttgut aufgesetzt sein kann, so dass dieses allein durch die wirkende Gewichtskraft durch die Trockenschüttgut-Zuführöffnung hindurch in die Schraubengänge der zweiten Schnecke eintritt. Durch diese vergleichsweise große Zuführöffnung wird eine stets ausreichende Zufuhr von Trockenschüttgut erzielt, ohne dass die Gefahr besteht, dass die Trockenschüttgut-Zufuhröffnung durch das Trockenschüttgut selbst verschlossen wird oder die Gewindegänge der zweiten Schnecke nicht vollständig mit Trockenschüttgut aufgefüllt werden, wodurch es zu Schwankungen im Mischungsverhältnis kommen kann.

Gemäß einer weiteren Ausführungsform der Erfindung besitzt die erste Schnecke im Bereich des ersten Endes der Mischkammer - also in dem Bereich der Mischkammer, in den die zweite Schnecke einmündet - einen im Wesentlichen zylinderförmigen Abschnitt, an den sich der konisch zulaufende Abschnitt unmittelbar anschließt. Hierdurch wird der Vorteil erhalten, dass das Ende der zweiten Schnecke bis auf einen Abstand von nur wenigen Millimetern an die zweigängige Wendel der ersten Transport- und Mischschnecke herangeführt werden kann, ohne dass es zu einer Kollision der Wendel der ersten Schnecke mit dem Ende der zweiten Schnecke kommt. Durch diesen geringen Abstand von nur einem oder wenigen Millimetern wird weiterhin das Volumen der Mischkammer in vorteilhafter Weise auf ein Mindestmaß verringert, das in Verbindung mit der zweigängigen Ausgestaltung der ersten Schnecke zu der in der Praxis sehr guten und homogenen Durchmischung der zugeführten Materialien führt.

Gemäß einer weiteren, im Hinblick auf eine möglichst gleichförmige Durchmischung vorteilhaften Ausführungsform der Erfindung werden die erste und/oder die zweite Flüssigkomponente über Zufuhröffnungen zugeführt, die im Bereich des zylindrischen Abschnitts der ersten Schnecke angeordnet sind.

Hierbei hat es sich als besonders vorteilhaft herausgestellt, wenn die Zufuhröffnungen für die erste und zweite Flüssigkomponente der Position, an der das Schüttgut der Mischkammer durch die zweite Schnecke zugeführt wird, in Drehrichtung der ersten Schnecke betrachtet, nachgeordnet sind, wobei die Zufuhröffnungen für die erste und zweite Flüssigkomponente vorzugsweise im Winkel von im Wesentlichen 90° versetzt zueinander in die Mischkammer einmünden. Demgemäß ergibt sich von der Auslassöffnung aus betrachtet eine Anordnung der erfindungsgemäßen Vorrichtung, bei der unter Berücksichtigung der Drehrichtung der ersten Schnecke zuerst das Trockenschüttgut in die Mischkammer eingebracht wird, das Mischgut nach einer Drehung der ersten Schnecke um 90° mit der ersten Flüssigkomponente, beispielsweise dem Binder des Zweikomponenten-Polymers, versetzt wird, und nach einer Weiterdrehung der ersten Schnecke um 90° die zweite Flüssigkeitskomponente, z. B. der Härter des Zweikomponenten-Polymers, zugeführt wird.

Sofern es gewünscht ist, eine weitere Flüssigkomponente zuzuführen, kann dies durch Einspritzen der Flüssigkomponente über eine weitere Öffnung in den zylindrischen Teil, vorzugsweise im Bereich des Schneckenanfangs der Mischkammer, an einer Position erfolgen, die der Zuführöffnung für die zweite Flüssigkomponente vorzugsweise um 90° nachgeordnet ist, und die sich beispielsweise auf der Unterseite der erfindungsgemäßen Vorrichtung befindet, wenn das Trockenschüttgut horizontal zugeführt wird. In gleicher Weise ist eine sternförmige Materialzuführung am Mischschneckenanfang möglich.

Um auch bei einer sehr kurzen Länge der ersten zweigängigen Transport- und Mischschnecke eine in höchstem Maße homogene Durchmischung zu erhalten, sind die Gewindegänge oder Wendel der ersten Schnecke vorzugsweise mit Riffeln oder im spitzen Winkel zulaufenden Vertiefungen versehen, welche beispielsweise in die Gewindegänge als Ausfräsungen eingebracht sind. Durch diese erfindungsgemäßen Riffeln, d.h. die wellige Oberflächenstruktur, wird in Kombination mit der Zweigängigkeit der ersten Schnecke und der geringen Größe der Mischkammer durch die unmittelbar angrenzende zweite Schnecke eine intrinsische Umwälzung des Trockenschüttguts in allen drei Raumrichtungen während und nach der Zufuhr der ersten und/oder zweiten Flüssigkomponente erzielt.

Gemäß einer weiteren Ausführungsform der Erfindung ist die erste Schnecke in vorteilhafter Weise mit einem ersten drehzahlgeregelten Antrieb gekoppelt, und die zweite Transportschnecke für das Trockenschüttgut wird durch einen ebenfalls drehzahlgeregelten zweiten Antrieb rotiert. Die beiden Antriebe, vorzugsweise Elektromotoren, werden hierbei über eine Steuerungseinrichtung während des Mischvorgangs in der Weise geregelt, dass zum einen das Verhältnis von Trockenschüttgut zur Menge an Flüssigkomponenten konstant gehalten wird, und zum anderen zur Erhöhung, bzw. zur Verringerung der Gesamtmenge an Mischgut die Drehzahlen der ersten und zweiten Schnecke bei vorzugsweise gleichbleibendem Drehzahlverhältnis entsprechend gleichzeitig erhöht oder erniedrigt werden.

Darüber hinaus ist bei der bevorzugten Ausführungsform der Erfindung zusätzlich noch die Menge der ersten und/oder zweiten Flüssigkomponente veränderbar, um hierdurch durch eine Veränderung des Mischungsverhältnisses der ersten und zweiten Flüssigkomponenten die Eigenschaften des Zweikomponenten-Polymers in gewünschter Weise zu verändern, bzw. um unterschiedliche Arten von Zweikomponenten-Polymeren mit verschiedenen Mischungsverhältnissen zu verarbeiten. In gleicher Weise besteht die Möglichkeit, die Konsistenz des Gemisches aus Trockenschüttgut und erster, bzw. zweiter Flüssigkomponente variabel einstellbar zu verändern.

Hierdurch eröffnet sich die Möglichkeit, Kunststoffprodukte mit einer über das Produkt hinweg veränderlichen Dichte oder Härte des Kunststoffanteils herzustellen, was bei der bevorzugten Ausführungsform der Erfindung dadurch erfolgt, dass die zugeführte Trockenschüttgutmenge beim Einfüllen derselben in die zugehörige Gussform für das Kunststoffprodukt kontinuierlich oder stufenweise vergrößert oder verkleinert wird, indem die Drehzahl der zweiten Schnecke entsprechend erhöht oder erniedrigt wird. Zur Veränderung der Härte des Kunststoffanteils, beziehungsweise der Elastizität desselben wird hierbei vorzugsweise die Gesamtmenge der beiden Flüssigkomponenten des Zweikomponenten-Polymers entsprechend stufenlos erhöht oder verringert.

Um schließlich die Gefahr von Lufteinschlüssen im Mischgut vollständig ausschließen zu können, kann es weiterhin vorgesehen sein, die Mischkammer mit Unterdruck zu beaufschlagen. In gleicher Weise ist es jedoch ebenfalls möglich, die Mischkammer zusätzlich mit einem Gasgemisch zu beaufschlagen, beispielsweise um gezielt Gasblasen in das Mischgut einzubringen, bzw. um schaumähnliche Gemischqualitäten zu erreichen.

Die Erfindung wird nachfolgend mit Bezug auf die Zeichnungen anhand von bevorzugten Ausführungsformen beschrieben.

In den Zeichnungen zeigen:
- Fig. 1: eine schematische Aufsicht auf die erfindungsgemäße Vorrichtung mit einer räumlichen Darstellung der ersten und zweiten Schnecke,
- Fig. 2: eine Schnittansicht der erfindungsgemäßen Vorrichtung im Bereich der zweiten Schnecke, und
- Fig. 3: eine Schnittansicht der erfindungsgemäßen Vorrichtung im Bereich der ersten Transport- und Mischschnecke.

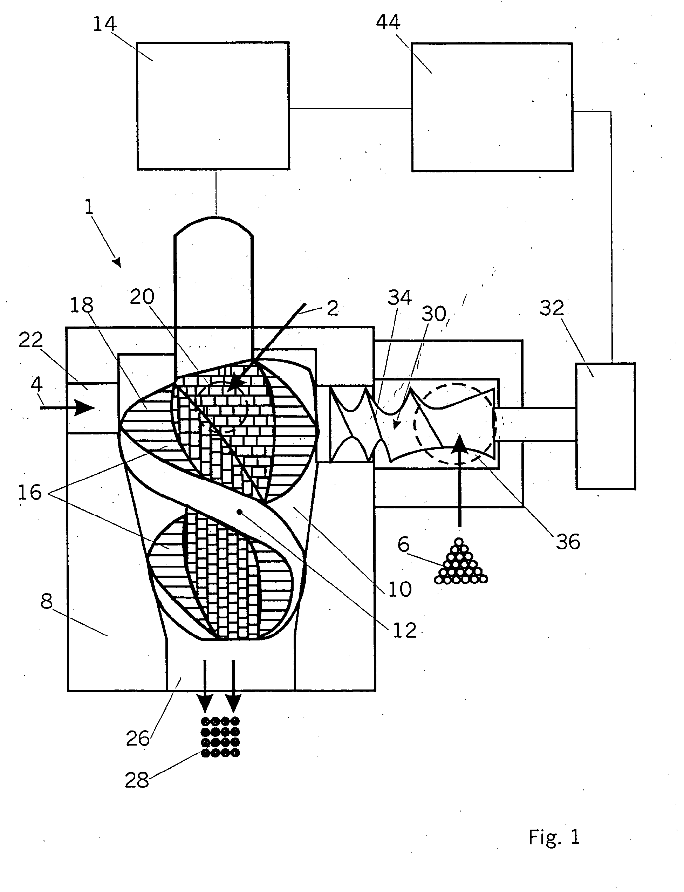

Wie in den Fig. 1, 2 und 3 gezeigt ist, umfasst eine erfindungsgemäße Vorrichtung 1 zum Mischen einer in Fig. 1 symbolisch durch die Pfeile dargestellten ersten und zweiten Flüssigkomponente 2, 4 mit Trockenschüttgut 6 ein Gehäuse 8, in dem eine Mischkammer 10 gebildet ist, in der eine erste zweigängige Transport- und Mischschnecke 12 mit einer Drehzahl von beispielsweise 3000 Umdrehungen pro Minute rotiert, die durch einen ersten Antriebsmotor 14 und eine nicht näher bezeichnete Welle angetrieben wird. Die erste Schnecke 12 weist hierbei einen Doppelwendel oder zweigängigen Wendel 16 auf, der mit in Fig. 1 schematisch durch Linien angedeuteten Riffeln oder Wellen, beziehungsweise Vertiefungen 18 zur besseren Durchmischung des Mischguts 6 versehen ist. Die erste Flüssigkomponente 2 und die zweite Flüssigkomponente 4 werden der Mischkammer 10 im Bereich ihres ersten Endes (linke Seite in Fig. 1) über entsprechende Zufuhröffnungen 20 und 22 zugeführt, von denen die Zuführöffnung 20 für die erste Flüssigkomponente 4 in Fig. 1 schematisch durch gestrichelte Linien dargestellt ist. Die Menge der zugeführten Flüssigkomponenten 2 und 4 kann hierbei über nicht dargestellte Ventile, bzw. über eine Veränderung der Förderleistung von ebenfalls nicht dargestellten Förderpumpen stufenlos verändert werden.

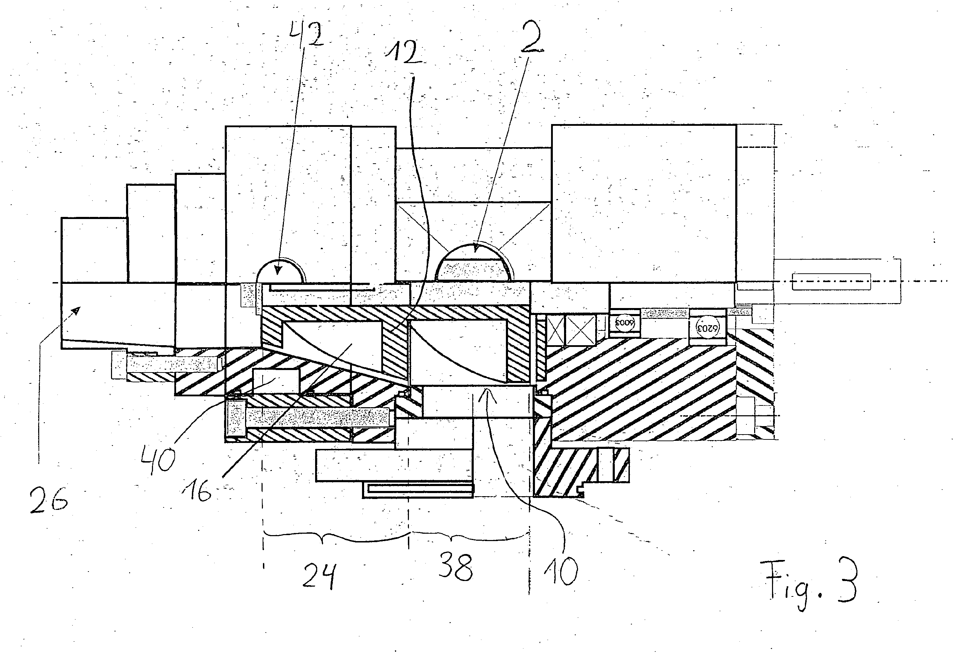

Wie den Fig. 1 und 3 weiterhin im Einzelnen entnommen werden kann, weist die erste Schnecke 12 einen konischen Abschnitt 24 auf, der sich in Richtung zu einer am zweiten Ende (linke Seite von Fig. 1 und 3) gelegenen Auslassöffnung 26 für das fertige Mischgut 28 hin z. B. auf 60 % seines ursprünglichen Durchmessers verjüngt.

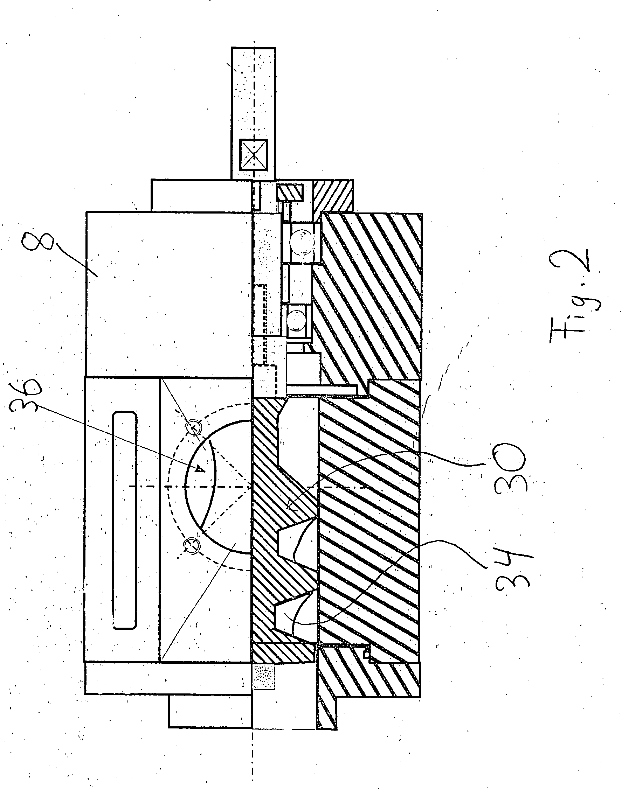

Wie der Darstellung von Fig. 1 und der Detaildarstellung von Fig. 2 weiterhin entnommen werden kann, ist im Gehäuse 8 eine im Wesentlichen senkrecht zur ersten Schnecke 12 angeordnete zweite Schnecke 30 angeordnet, die durch einen zweiten Antriebsmotor 32 und eine nicht näher bezeichnete Antriebswelle rotiert wird.

Der Wendel 34 der zweiten Schnecke 30 besitzt dabei im Bereich einer Zuführöffnung 36 für das Trockenschüttgut 6 eine asymmetrische Wendelform, wobei die Ganghöhe des Wendels 34 sich zur Mischkammer 10 hin verringert. Die zweite Schnecke 30 ragt hierbei mit ihrem mischkammerseitigen Ende unmittelbar bis an die Wendel 16 der ersten Schnecke 12 heran.

In dem Bereich, in dem die zweite Schnecke 30 an die Mischkammer 10 angrenzt, besitzt die erste Schnecke 12 einen im Wesentlichen zylinderförmigen Abschnitt 38. Sofern hier allgemein von konischem Abschnitt 24, bzw. von zylinderförmigem Abschnitt 38 der Schnecke 12 gesprochen wird, ist hiermit die vom Doppelwendel 16 bei der Drehung der ersten Schnecke 12 überstrichene Hüllkurve gemeint, der eine entsprechend ausgestaltete Wandung auf der Innenseite des Gehäuses 8 zugeordnet ist.

Gemäß der Darstellung von Fig. 3 kann im Bereich des zylindrischen Abschnitts 24 der ersten Schnecke 12 ein Kühlmantel 40 mit einer Zufuhröffnung 42 zum Einleiten von Kühlwasser vorgesehen sein, um die beim Betrieb der erfindungsgemäßen Vorrichtung 1 entstehende Wärme abzuführen.

Die beiden Antriebsmotoren 14 und 32 für die erste und zweite Schnecke 12 und 30 werden gemäß der Darstellung von Fig. 1 durch eine elektronische Steuerungs- und Regelungseinrichtung 44 entsprechend den Vorgaben für die gewünschte Menge an Mischgut 28, beziehungsweise für das Mengenverhältnis von erster und zweiter Flüssigkomponente 2, 4 und/oder gewünschtem Anteil von erster und/oder zweiter Flüssigkomponente zu Trockenschüttgut geregelt.

### Liste der Bezugszeichen

- 1: erfindungsgemäße Vorrichtung
- 2: erste Flüssigkomponente
- 4: zweit Flüssigkomponente
- 6: Trockenschüttgut
- 8: Gehäuse
- 10: Mischkammer
- 12: erste Transport- und Mischschnecke
- 14: erster Antriebsmotor
- 16: Doppelwendel
- 18: Riffeln
- 20: Zufuhröffnung für erste Flüssigkeitskomponente
- 22: Zuführöffnung für zweite Flüssigkeitskomponente
- 24: konischer Abschnitt
- 26: Auslassöffnung
- 28: fertiges Mischgut
- 30: zweite Schnecke
- 32: zweiter Antriebsmotor
- 34: Wendel der zweiten Schnecke
- 36: Trockenschüttgut-Zuführöffnung
- 38: zylindrischer Abschnitt
- 40: Kühlmittel
- 42: Öffnung für Kühlwasser
- 44: elektronische Regelungseinrichtung

## Patentansprüche

1. Vorrichtung zum Mischen von wenigsten zwei Flüssigkomponenten (2, 4) insbesondere Polyol und Isozynat, mit Trockenschüttgut (6),
mit einer eine rotierende erste Schnecke (12) enthaltenden Mischkammer (10), der die Flüssigkomponenten (2, 4) an einem ersten Ende zugeführt werden, und aus der das fertige Mischgut (28) durch eine Auslassöffnung (26) hindurch an einem zweiten Ende austritt, wobei die erste Schnecke (12) einen zur Auslassöffnung (26) hin zusammenlaufenden konischen Abschnitt (24) aufweist, und eine zweite, im Wesentlichen im Winkel zur ersten Schnecke (12) angeordnete Transportschnecke (30) vorgesehen ist, die das Schüttgut (6) im Bereich des ersten Endes in die Mischkammer (10) fördert,
**dadurch gekennzeichnet, dass**
die erste Schnecke (12) als eine mehrgängige Transport- und Mischschnecke ausgebildet ist.

2. Vorrichtung nach Anspruch 1,
**dadurch gekennzeichnet,**
**dass** der Wendel (34) der zweiten Schnecke (3) eine asymmetrische Form aufweist.

3. Vorrichtung nach einem der vorhergehenden Ansprüche,
**dadurch gekennzeichnet,**
**dass** die Ganghöhe der zweiten Schnecke (30) zur Mischkammer (10) hin abnimmt.

4. Vorrichtung nach einem der vorhergehenden Ansprüche,
**dadurch gekennzeichnet,**
**dass** das Trockenschüttgut (6) über eine oberhalb der zweiten Schnecke (30) angeordnete Trockenschüttgut-Zufuhröffnung (36) zugeführt wird.

5. Vorrichtung nach Anspruch 4,
**dadurch gekennzeichnet,**
**dass** die Trockenschüttgut-Zufuhröffnung (36) einen Durchmesser besitzt, der im Wesentlichen dem Durchmesser der zweiten Schnecke (30) entspricht.

6. Vorrichtung nach einem der Ansprüche 4 oder 5,
**dadurch gekennzeichnet,**
**dass** unmittelbar oberhalb der Trockenschüttgut-Zufuhröffnung (36) ein Behälter für das Trockenschüttgut (6) angeordnet ist.

7. Vorrichtung nach einem der vorhergehenden Ansprüche,
**dadurch gekennzeichnet,**
**dass** die erste Schnecke (12) im Bereich des ersten Endes der Mischkammer (10) einen im Wesentlichen zylinderförmigen Abschnitt (38) aufweist, an den sich der konische Abschnitt (24) anschließt.

8. Vorrichtung nach Anspruch 7,
**dadurch gekennzeichnet,**
**dass** die erste und zweite Flüssigkomponente (2, 4) über Zufuhröffnungen (20, 22) zugeführt werden, die im Bereich des zylinderförmigen Abschnitts (24) der ersten Schnecke (12) angeordnet sind.

9. Vorrichtung nach Anspruch 8,
**dadurch gekennzeichnet,**
**dass** die Zuführöffnungen (20, 22) für die erste und/oder zweite Flüssigkomponente (2, 4) der Position, an der das Schüttgut (6) der Mischkammer (10) durch die zweite Schnecke (30) zugeführt wird, in Drehrichtung der ersten Schnecke (12) betrachtet, nachgeordnet sind.

10. Vorrichtung nach Anspruch 9,
**dadurch gekennzeichnet,**
**dass** die Zufuhröffnungen (20, 22) für die erste und zweite Flüssigkomponente im Winkel von 90 ° versetzt zueinander in die Mischkammer (10) münden.

11. Vorrichtung nach einem der vorhergehenden Ansprüche,
**dadurch gekennzeichnet,**
**dass** die erste Schnecke (12) mit die Durchmischung des Mischguts (28) fördernden Riffeln (18) versehen ist.

12. Vorrichtung nach einem der vorhergehenden Ansprüche,
**dadurch gekennzeichnet,**
**dass** die erste Schnecke (12) und/oder die zweite Schnecke (30) über drehzahlgeregelte Antriebe (14, 32) rotiert werden, und dass eine Regelungseinrichtung (44) vorgesehen ist, mit der die Fördermenge des Mischguts (28) und/oder das Mischungsverhältnis von Trockenschüttgut (6) und Flüssigkomponenten (2, 4) durch eine Änderung der Drehzahl der Antriebe (14, 32) stufenlos einstellbar ist.

13. Vorrichtung nach einem der vorhergehenden Ansprüche,
**dadurch gekennzeichnet,**
**dass** die Mischkammer (10) und/oder eine der Flüssigkomponenten (2, 4) mit einem Gasgemisch beaufschlagt wird.
